# FASCICULE DE BREVET EUROPEEN

(11) **EP 3 143 460 B1**
(45) Date de publication et mention de la délivrance du brevet: **24.10.2018**
(21) Numéro de dépôt: 15729876.1
(22) Date de dépôt: 12.05.2015
(51) Int. Cl.: G02C 11/06, G02C 5/14, H04R 25/00

(54) **MANCHON DE LUNETTES DESTINÉ À CONTENIR UNE PARTIE D'UN APPAREIL ACOUSTIQUE**
GEHÄUSE FÜR DIE AUFNAHME EINES HÖRGERÄT
EYEGLASS ADAPTER FOR A HEARING DEVICE

(30) Priorité: 12.05.2014 FR 1401129
(43) Date de publication de la demande: 22.03.2017
(73) Titulaire: Beausoleil, 75116 Paris (FR); Carriou, Xavier, 49770 Le Plessis Macé (FR)
(72) Inventeur: CARRIOU, Xavier, 49770 le Plessis Macé (FR); BEAUSOLEIL, Frédéric, 75003 Paris (FR)
(74) Mandataire: Degret, Jacques
(86) Numéro de dépôt international: PCT/FR2015/000096
(87) Numéro de publication internationale: WO 2015/173480

(56) Documents cités:
- WO-A2-99/13682
- DE-A1- 3 027 080
- DE-U1- 8 904 497
- FR-A1- 2 688 073
- FR-A1- 2 915 049
- US-A1- 2005 074 137
- US-A1- 2007 253 586
- US-A1- 2008 143 954

## Description

### DOMAINE TECHNIQUE DE L'INVENTION

La présente invention concerne un manchon de lunettes destiné à contenir une partie d'un appareil acoustique. Bien évidemment, l'invention concerne également des lunettes équipées du manchon précité.

### ARRIÈRE-PLAN TECHNOLOGIQUE DE L'INVENTION

Les lunettes et les appareils acoustiques (encore appelés appareils auditifs) pallient les unes et les autres une déficience du système locomoteur. Ils constituent en conséquence deux orthèses différentes qui, toutefois, et ceci de plus en plus fréquemment du fait de l'âge, trouvent place par obligation au même endroit pour tout utilisateur dont la vue doit être corrigée et dont l'ouïe doit être améliorée.

Ces deux orthèses s'avèrent en effet plus particulièrement encombrantes pour le seul contour du pavillon d'oreille où, de manière générale, se placent ces deux objets.

Il existe des coudes d'appareils acoustiques spéciaux prévus pour emmancher la branche de lunettes en la coupant à la taille désirée, mais cela dénature la paire de lunettes et condamne l'appareil à avoir un coude spécial.

Il existe des branches auditives spécifiques, mais cela oblige à aménager la monture des lunettes pour pouvoir recevoir de telles branches.

Il existe également des systèmes audio à accrocher aux branches de lunettes, mais de tels systèmes ne sont pas stables.

Enfin, il existe des branches creusées pour y loger soit seulement la pile ou la batterie de l'appareil acoustique, soit une partie (l'émetteur) de cet appareil dénommé alors RIC (receiver in the canal) dont seul l'écouteur ou haut-parleur est en conséquence situé dans le conduit auditif de l'oreille.

Tout appareil acoustique comprend en effet une pile ou une batterie d'alimentation électrique, un microphone, un amplificateur et un convertisseur de signaux ainsi qu'un écouteur ou haut-parleur.

Dorénavant, le plus souvent, les lunettes associées à une orthèse auditive sont conçues de telle manière que leurs branches latérales qui soutiennent leur façade optique ou solaire reçoivent chacune, à leur extrémité libre, un manchon de confort en contact avec une oreille de l'utilisateur.

Ceci est vrai quelle que soit la forme, courbe ou droite, des extrémités des branches des montures de lunettes.

De tels manchons sont toujours amovibles et ils sont le plus souvent en une matière plastique dès lors qu'il est prévu qu'ils s'appuient directement sur l'os du rocher, sous les cheveux.

L'invention s'applique plus particulièrement à tout manchon de lunettes destiné à être assujetti à son extrémité avant à l'extrémité libre d'une branche desdites lunettes et à contenir une partie d'un appareil acoustique à proximité immédiate de son extrémité arrière située au voisinage de l'oreille de l'utilisateur équipé desdites lunettes, ledit manchon comportant un évidement, apte à recevoir et à maintenir fixement la partie précitée de l'appareil acoustique, et étant percé sur une partie de sa longueur d'un conduit s'étendant depuis l'évidement vers l'extrémité avant du manchon et débouchant à l'extérieur de ce dernier, au niveau de sa face inférieure, ledit conduit étant destiné à recevoir le câble reliant la source d'alimentation électrique logée seule ou avec l'émetteur dans l'évidement à l'autre partie de l'appareil acoustique disposée dans le conduit auditif de l'utilisateur équipé des lunettes.

Ces manchons sont par exemples connus des documents DE 30 27 080, DE 88 08 620.8, GB 1.089.238 ou encore US 2005/0074137.

Un des inconvénients majeurs commun à tous ces types d'appareils acoustiques est dû à la difficulté d'ajuster le câble reliant la partie de l'appareil (c'est-à-dire au moins sa pile) logée et maintenue fixement à l'arrière du manchon et la partie de l'appareil (c'est-à-dire au moins son écouteur) située dans le conduit auditif de l'oreille de l'utilisateur.

En effet, dans tout appareil acoustique, le câble électrique est d'une longueur fixe, imposée par le constructeur, et ce câble ne saurait être coupé sauf alors à rendre l'appareil inutilisable.

Aussi, pour répondre à tous les types de pavillon d'oreille, les fabricants d'appareils acoustiques proposent en général leurs appareils avec cinq longueurs possibles de câble.

En dépit de cette multiplicité de longueurs, il est fréquent, pour ne pas dire constant, que la longueur du câble dont est doté un appareil acoustique ne satisfait cependant pas l'utilisateur, ce dernier souhaitant en effet que l'ajustement soit parfait, c'est-à-dire que le câble ne soit ni trop court, ni trop long.

Si le câble est trop court, il exerce une traction sur l'écouteur qui n'est alors plus situé dans l'oreille de l'utilisateur aussi parfaitement qu'il le devrait ; si le câble est trop long, il pend le long de l'oreille, ce qui est tout à fait inesthétique et, en outre, gênant pour l'utilisateur qui, très souvent, préfère dissimuler à ses interlocuteurs le fait qu'il est malentendant et qui exige donc dans toute la mesure du possible que le câble de son appareil acoustique passe au-dessus du pavillon de son oreille puis descende de ce dernier verticalement à l'aplomb du tragus, sans subir une quelconque traction.

La présente invention se propose de remédier aux inconvénients exposés ci-dessus.

### DESCRIPTION GÉNÉRALE DE L'INVENTION

La présente invention est définie dans les revendications et a pour premier objet un manchon de lunettes destiné à être assujetti à son extrémité avant à l'extrémité libre d'une branche desdites lunettes et à contenir une partie d'un appareil acoustique à proximité immédiate de son extrémité arrière située au voisinage de l'oreille de l'utilisateur équipé desdites lunettes, ledit manchon comportant un évidement, apte à recevoir et à maintenir fixement la partie précitée de l'appareil acoustique, et étant percé sur une partie de sa longueur d'un conduit s'étendant depuis l'évidement vers l'extrémité avant du manchon et débouchant à l'extérieur de ce dernier, au niveau de sa face inférieure, ledit conduit étant destiné à recevoir le câble reliant la source d'alimentation électrique logée seule ou avec l'émetteur dans l'évidement à l'autre partie de l'appareil acoustique disposée dans le conduit auditif de l'utilisateur équipé des lunettes, caractérisé en ce que le conduit se prolonge sous la forme d'une goulotte creusée dans la face inférieure du manchon, la largeur de l'ouverture sur l'extérieur de ladite goulotte étant inférieure en au moins deux emplacements au diamètre du câble de sorte à offrir au moins deux positions de pincement du câble entre les deux bords convergents de ladite ouverture.

Selon une première variante de réalisation, la largeur de l'ouverture sur l'extérieur de la goulotte est sensiblement constante, inférieure au diamètre du câble sur toute la partie de ladite goulotte apte à recevoir ledit câble, de sorte à offrir une multiplicité de positions de pincement du câble entre les deux bords convergents de ladite ouverture.

Selon une seconde variante de réalisation, le conduit débouche à l'extérieur du manchon suivant une direction légèrement inclinée relativement à celle de la face inférieure du manchon de sorte que la largeur de l'ouverture sur l'extérieur de la goulotte augmente progressivement, de l'arrière vers l'avant du manchon, mais demeure par endroits inférieure au diamètre du câble de sorte à offrir néanmoins diverses positions de pincement du câble entre ses bords convergents.

Dans ce second cas, dans la zone où il débouche dans la face inférieure du manchon, la direction générale du conduit est inclinée d'un angle inférieur à 20°, et de préférence voisin de 10°, relativement au plan de ladite face inférieure du manchon.

Avantageusement, le conduit et la goulotte qui le prolonge peuvent être sensiblement situés dans le plan de symétrie longitudinale du manchon.

Toujours avantageusement, l'ouverture sur l'extérieur de la goulotte s'étend au-dessus du pavillon de l'oreille de l'utilisateur équipé desdites lunettes.

Selon une construction préférentielle, l'ouverture de la goulotte s'étend sur une longueur comprise entre 1 et 2 cm.

Selon une autre construction préférentielle, l'une des positions de pincement du câble entre les bords de l'ouverture de la goulotte est située à l'aplomb du tragus de l'utilisateur équipé des lunettes.

Très avantageusement, la largeur de l'ouverture sur l'extérieur de la goulotte est comprise entre 50% et 95% du diamètre du câble
La présente invention a également pour deuxième objet un manchon de lunettes doté d'une partie d'un appareil acoustique logé dans son évidement.

Enfin, elle a pour troisième objet des lunettes dans lesquelles l'une de leurs deux branches est équipée d'un manchon possédant l'une au moins des caractéristiques susvisées.

### BRÈVE DESCRIPTION DES DESSINS

Les spécifications détaillées de l'invention sont données dans la description qui suit en liaison avec les dessins ci-annexés. Il est à noter que ces dessins n'ont d'autre but que celui d'illustrer le texte de la description et qu'ils ne constituent donc en aucune sorte une limitation de la portée de l'invention.

Dans ces dessins :
- la figure 1 représente de côté et de face un manchon conforme à l'invention.
- la figure 2 est une vue de côté d'une variante de manchon dont l'évidemment est seulement pourvu d'une pile d'alimentation électrique.
- la figure 3 schématise la coupe du manchon de la figure 2 permettant de le mettre à bonne longueur en fonction du profil de l'utilisateur,
- la figure 4 est une vue de côté du manchon de la figure 2 sans sa pile,
- les figures 5, 6 et 7 sont des vues du manchon conforme à l'invention illustrant diverses positions de pincement du câble et diverses longueurs dudit manchon,
- les figures 8 et 9 illustrent une vue de côté en coupe longitudinale et une vue par l'arrière d'une variante de manchon comprenant un évidement pour recevoir une pile,
- les figures 10 et 11 illustrent une vue de côté en coupe longitudinale et une vue par l'arrière d'une autre variante de manchon comprenant un évidement pour recevoir une pile ainsi que toute la partie émetteur de l'appareil acoustique.

### DESCRIPTION DES MODES DE RÉALISATION PRÉFÉRÉS DE L'INVENTION

L'invention a trait à un manchon de lunettes destiné à contenir une partie d'un appareil acoustique, cette partie pouvant être soit la pile ou la batterie pour l'alimentation électrique, qui en tout état de cause est logée dans l'évidement prévu à l'extrémité arrière dudit manchon, soit cet élément d'alimentation complété du microphone, de l'amplificateur et du convertisseur de signaux qui forment la partie émetteur de l'appareil.

En revanche, l'écouteur ou haut-parleur est toujours extérieur au manchon dès lors qu'il est destiné à être placé dans le conduit auditif de l'utilisateur de l'appareil. Cette partie récepteur est complétée de la partie émetteur lorsque seule la pile ou batterie est logée dans le manchon.

Dans tous les exemples de réalisation du manchon selon l'invention représentés sur les diverses figures annexées, il a été choisi que ledit manchon soit doté d'un trou borgne allongé 1 qui s'étend sur la presque totalité de la longueur du manchon, de son extrémité avant 2 en direction de son extrémité arrière 3, ce trou borgne 1 étant apte à recevoir l'extrémité libre d'une branche des lunettes. Il va toutefois de soi que le manchon conforme à l'invention pourrait tout aussi bien coopérer avec l'extrémité de la branche selon une disposition inverse de la précédente, l'élément mâle étant placé à l'extrémité avant 2 du manchon et l'élément femelle étant percé en bout de l'extrémité libre de chacune des deux branches de la monture des lunettes.

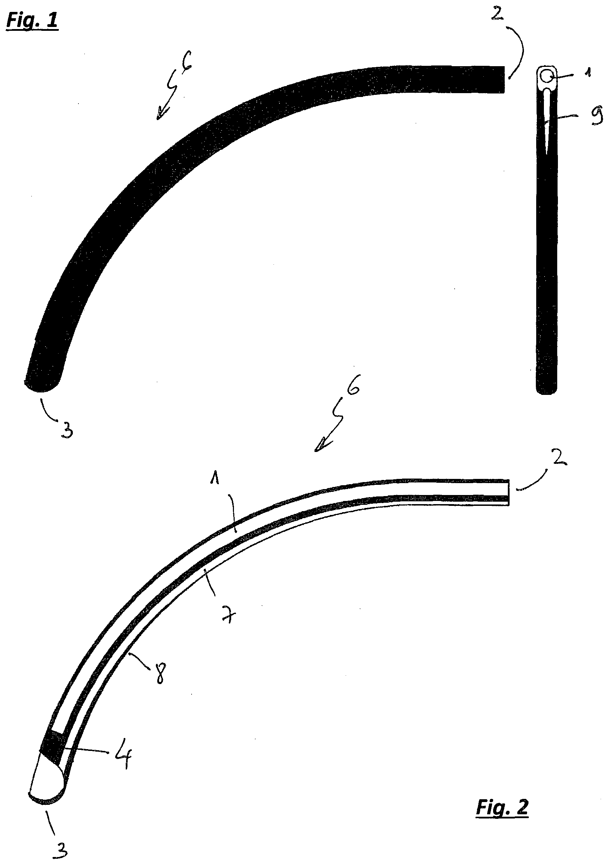

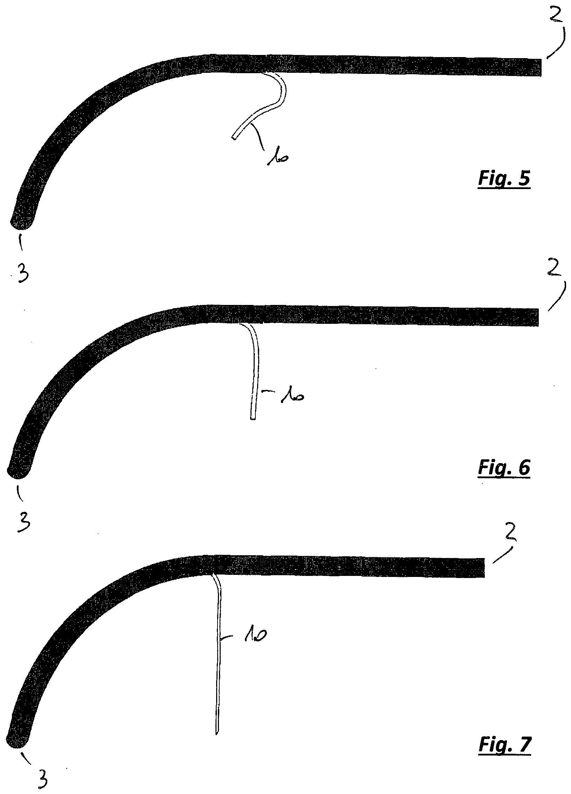

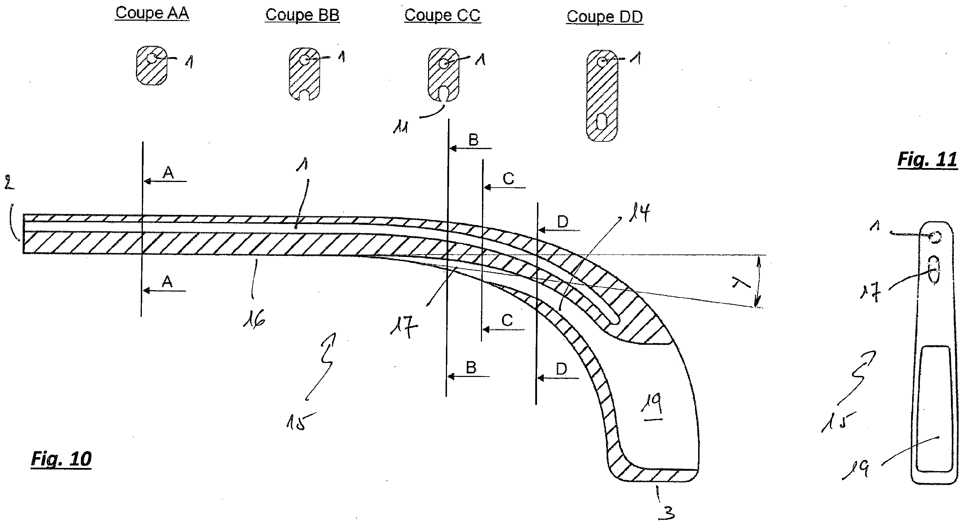

Il a été représenté sur les figures 1 à 4 une première variante de réalisation du manchon selon l'invention dans laquelle la partie de l'appareil acoustique qui y est logée se réduit à une pile 4, l'évidement 5 qui reçoit fixement cette pile étant alors bien évidemment d'un volume lui aussi réduit. Un tel manchon 6 est percé sur au moins une partie de sa longueur, ici sur toute sa longueur, d'un conduit 7 qui s'étend depuis l'évidement 5 vers l'extrémité avant 2 dudit manchon et qui débouche à l'extérieur de ce dernier, au niveau de sa face inférieure 8, en étant sensiblement tangentiel à cette face 8 afin de former une goulotte 9 dont le profil est identique à celui qui est visible sur les figures 10 et 11, en partie basse de leur coupe CC. Le conduit 7 qui se prolonge sous la forme de la goulotte 9 « à ciel ouvert » est destiné à recevoir avec un très léger jeu le câble électrique 10 visible sur les figures 5 à 7. On comprend dès lors que, si la largeur de l'ouverture 11 de la goulotte 9 est inférieure en divers emplacements au diamètre du câble 10, on crée en ces emplacements de potentielles positions de pincement dudit câble entre les deux bords convergents 12 de ladite ouverture.

Il suffit pour cela que la distance séparant les deux bords 12 en vis-à-vis soit de l'ordre de 50% à 95% du diamètre du câble 10.

D'ailleurs, idéalement, cette distance entre les deux bords 12 de l'ouverture 11 sera sensiblement constante sur toute la longueur de la goulotte 9 de sorte à offrir ainsi une multiplicité de positions pour le pincement du câble 10.

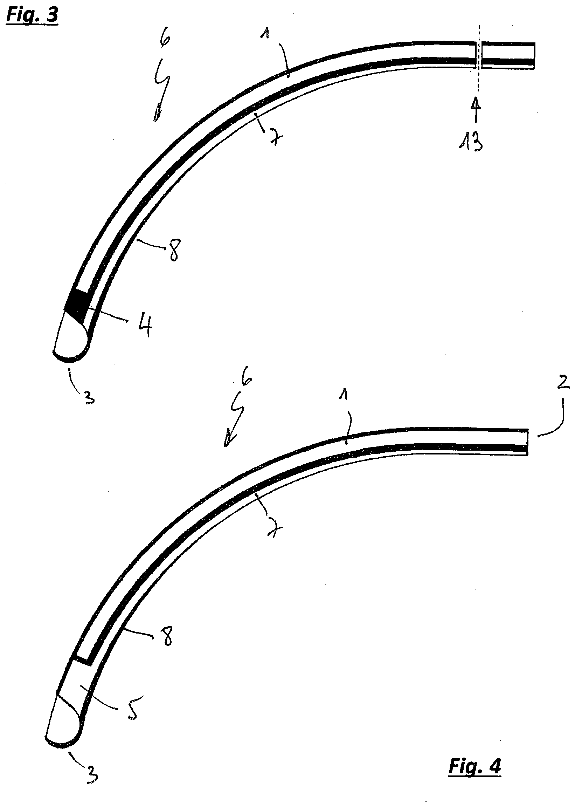

En fonction du profil de l'utilisateur, le professionnel assurant la mise au point des lunettes recevant l'appareil acoustique coupera le manchon conforme à l'invention à la longueur voulue, repérée par la flèche 13 à la figure 3, puis il pincera le câble électrique à un emplacement situé au plus près de l'aplomb du tragus de l'utilisateur. L'éventuel excédent de câble sera placé et maintenu dans l'évidement 5. Les figures 5 à 7 illustrent la très grande variété de moyens mis à la disposition du professionnel : plus l'emplacement du pincement du câble 10 sera proche de l'extrémité arrière 3 du manchon 6, plus importante sera la longueur du câble dont il disposera pour placer convenablement la partie récepteur de l'appareil acoustique dans le conduit auditif de l'utilisateur ; plus le manchon sera raccourci, plus la position à l'aplomb du tragus sera avancée.

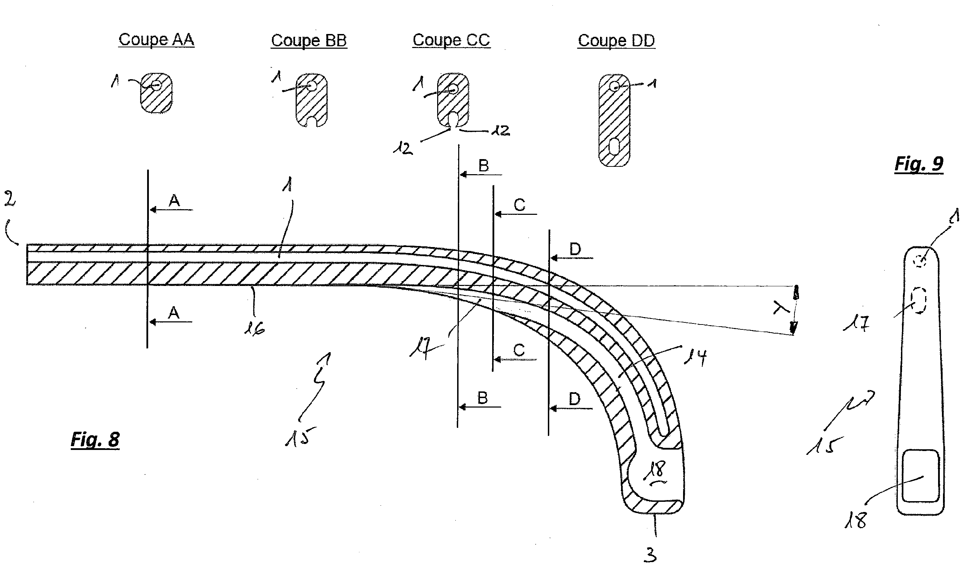

Il a été représenté sur les figures 8 à 11 une variante de construction dans laquelle le conduit 14 destiné à recevoir le câble électrique débouche à l'extérieur du manchon 15 en suivant cette fois une direction légèrement inclinée relativement à celle de la face inférieure 16 dudit manchon, ainsi que l'illustre l'angle Y. La partie supérieure de la paroi du conduit arrondi 14 est sensiblement tangente à la face inférieure 16 de sorte que l'on forme une goulotte 17 qui prolonge le conduit 14, goulotte à l'intérieur de laquelle le câble électrique sera prisonnier aussi longtemps que la distance séparant les deux bords 12 en vis-à-vis de ladite goulotte seront séparés d'une distance inférieure au diamètre du câble On comprend que la largeur de l'ouverture 11 de la goulotte 17 augmente progressivement, de l'arrière 3 vers l'avant 2 du manchon 15, ainsi que l'illustrent les coupes transversales successives DD, CC, BB et enfin AA, mais que, dans toute la zone où le conduit 14 débouche au niveau de la face inférieure 16, et bien au-delà, cette largeur de la goulotte ainsi formée est inférieure au diamètre du câble et offre de la sorte divers emplacement pour le pincement de ce dernier entre les bords convergents 12.

L'angle Y est inférieur à 20°, et il est de préférence voisin de 10° pour que, précisément, le segment de la goulotte le long duquel un pincement est permis soit le plus long possible.

La construction des figures 8 à 11 conviendra pour les branches de lunettes dont les extrémités sont courbes et la construction des figures 1 à 4 conviendra pour les branches de lunettes dont les extrémités sont droites mais pourra sans difficulté être également transposée aux branches dites courbes.

Le manchon 15 des figures 8 et 9 est plus particulièrement destiné à ne loger qu'une pile, son évidement 18 étant étroit, tandis que le manchon des figures 10 et 11 est prévu pour recevoir une pile et la partie émetteur de l'appareil acoustique, son évidement 19 étant notablement élargi.

Chaque évidement 5, 18 ou 19 pourra par construction être prévu latéral ou centré dans le plan de symétrie longitudinal du manchon. Idéalement, le conduit 7, 14 et la goulotte 9, 17 qui le prolonge seront en revanche situés de préférence dans ce plan de symétrie.

Comme il va de soi, l'invention ne se limite pas aux seuls modes d'exécution préférentiels décrits ci-dessus.

Elle embrasse au contraire toutes les variantes possibles de réalisation, pour autant que ces dernières ne sortent pas du cadre délimité par les revendications ci-jointes qui définissent la portée de la présente invention.

## Revendications

1. Manchon (6, 15) de lunettes destiné à être assujetti à son extrémité avant (2) à l'extrémité libre d'une branche desdites lunettes et à contenir une partie d'un appareil acoustique à proximité immédiate de son extrémité arrière (3) située au voisinage de l'oreille de l'utilisateur équipé desdites lunettes, ledit manchon comportant un évidement (5, 18, 19), apte à recevoir et à maintenir fixement la partie précitée de l'appareil acoustique, et étant percé sur une partie de sa longueur d'un conduit (7, 14) s'étendant depuis l'évidement vers l'extrémité avant (2) du manchon et débouchant à l'extérieur de ce dernier, au niveau de sa face inférieure (8,16), ledit conduit (7, 14) étant destiné à recevoir le câble (10) reliant la source (4) d'alimentation électrique logée seule ou avec l'émetteur dans l'évidement (5, 18, 19) à l'autre partie de l'appareil acoustique disposée dans le conduit auditif de l'utilisateur équipé des lunettes, **caractérisé en ce que** le conduit (7, 14) se prolonge sous la forme d'une goulotte (9, 17) creusée dans la face inférieure (8,16) du manchon, la largeur de l'ouverture (11) sur l'extérieur de ladite goulotte étant inférieure en au moins deux emplacements au diamètre du câble (10) de sorte à offrir au moins deux positions de pincement du câble (10) entre les deux bords convergents (12) de ladite ouverture (11).

2. Manchon (6) de lunettes selon la revendication 1, **caractérisé en ce que** la largeur de l'ouverture (11) sur l'extérieur de la goulotte (9) est sensiblement constante, inférieure au diamètre du câble (10) sur toute la partie de ladite goulotte apte à recevoir ledit câble, de sorte à offrir une multiplicité de positions de pincement du câble (10) entre les deux bords convergents (12) de ladite ouverture (11).

3. Manchon (15) de lunettes selon la revendication 1, **caractérisé en ce que** le conduit (14) débouche à l'extérieur du manchon suivant une direction légèrement inclinée relativement à celle de la face inférieure (16) du manchon de sorte que la largeur de l'ouverture (11) sur l'extérieur de la goulotte (17) augmente progressivement, de l'arrière (3) vers l'avant (2) du manchon, mais demeure par endroits inférieure au diamètre du câble (10) de sorte à offrir néanmoins diverses positions de pincement du câble entre ses bords convergents.

4. Manchon (15) de lunettes selon la revendication 3, **caractérisé en ce que**, dans la zone où il débouche dans la face inférieure (16) du manchon, la direction générale du conduit (14) est inclinée d'un angle (Y) inférieur à 20°, et de préférence voisin de 10°, relativement au plan de ladite face inférieure (16) du manchon.

5. Manchon (6, 15) de lunettes selon l'une quelconque des revendications 1 à 4, **caractérisé en ce que** le conduit (7, 14) et la goulotte (9, 17) qui le prolonge sont sensiblement situés dans le plan de symétrie longitudinale du manchon.

6. Manchon (6, 15) de lunettes selon l'une quelconque des revendications 1 à 5, **caractérisé en ce que** l'ouverture (11) sur l'extérieur de la goulotte (9, 17) s'étend au-dessus du pavillon de l'oreille de l'utilisateur équipé desdites lunettes.

7. Manchon (6, 15) de lunettes selon l'une quelconque des revendications 1 à 6, **caractérisé en ce que** l'ouverture (11) de la goulotte (9, 17) s'étend sur une longueur comprise entre 1 et 2 cm.

8. Manchon (6, 15) de lunettes selon l'une quelconque des revendications 1 à 7, **caractérisé en ce que** l'une des positions de pincement du câble (10) entre les bords (12) de l'ouverture (11) de la goulotte (9, 17) est située à l'aplomb du tragus de l'utilisateur équipé des lunettes.

9. Manchon (6, 15) de lunettes selon l'une quelconque des revendications 1 à 8, **caractérisé en ce que** la largeur de l'ouverture (11) sur l'extérieur de la goulotte (9, 17) est comprise entre 50% et 95% du diamètre du câble (10).

10. Manchon (6, 15) de lunettes selon l'une quelconque des revendications 1 à 9, **caractérisé en ce qu'**il est doté d'une partie d'un appareil acoustique logé dans son évidement (5, 18, 19) .

11. Lunettes **caractérisées en ce que** l'une de leurs deux branches est équipée d'un manchon (6, 15) conforme à l'une quelconque des revendications 1 à 9.

## Patentansprüche

1. Hülse (6, 15) für Brille, die dazu bestimmt ist, an ihrem vorderen Ende (2) mit dem freien Ende eines Bügels der Brille befestigt zu werden und einen Abschnitt eines Hörapparats in unmittelbarer Nähe ihres hinteren Endes (3) zu enthalten, das sich benachbart zum Ohr des Benutzers, der mit der Brille ausgerüstet ist, befindet, wobei die Hülse eine Ausnehmung (5, 18, 19) aufweist, die in der Lage ist, den vorgenannten Abschnitt des Hörapparats aufzunehmen und fest zu halten, und der über einen Abschnitt seiner Länge eines Kanals (7, 14) durchbrochen ist, der sich von der Ausnehmung zum vorderen Ende (2) der Hülse erstreckt und außen an diesem letzteren mündet, auf der Höhe seiner Unterseite (8, 16), wobei der Kanal (7, 14) dazu bestimmt ist, das Kabel (10) aufzunehmen, das die elektrische Speisequelle (4), die einzeln oder mit dem Emitter in der Ausnehmung (5, 18, 19) am anderen Abschnitt des Hörapparats aufgenommen ist, der in dem Hörkanal des mit der Brille versehenen Benutzers angeordnet ist, **dadurch gekennzeichnet, dass** der Kanal (7, 14) sich in Form eines Kabelkanals (9, 17) verlängert, der in der Unterseite (8, 16) der Hülse ausgehöhlt ist, wobei die Breite der Öffnung (11) des Kabelkanals nach außen um wenigstens zwei Stellen zum Durchmesser des Kabels (10) geringer ist, derart, wenigstens zwei Kneifpositionen des Kabels (10) zwischen den beiden konvergierenden Rändern (12) der Öffnung (11) anzubieten.

2. Hülse (6) für Brille nach Anspruch 1, **dadurch gekennzeichnet, dass** die Breite der Öffnung (11) des Kabelkanals (9) nach außen im Wesentlichen konstant ist, geringer als der Durchmesser des Kabels (10) über den gesamten Abschnitt des Kabelkanals, der in der Lage ist, das Kabel aufzunehmen, derart, eine Mehrzahl von Kneifpositionen des Kabels (10) zwischen den beiden konvergierenden Rändern (12) der Öffnung (11) anzubieten.

3. Hülse (15) für Brille nach Anspruch 1, **dadurch gekennzeichnet, dass** der Kanal (14) der Hülse nach außen gemäß einer Richtung mündet, die leicht geneigt ist bezüglich jener der Unterseite (16) der Hülse, derart, dass die Breite der Öffnung (11) des Kabelkanals (17) nach außen, von hinten (3) nach vorne (2) der Hülse zunehmend ansteigt, jedoch an manchen Stellen bezüglich des Durchmessers des Kabels (10) geringer bleibt, derart, trotzdem verschiedene Kneifpositionen des Kabels zwischen seinen konvergierenden Rändern anzubieten.

4. Hülse (15) für Brille nach Anspruch 3, **dadurch gekennzeichnet, dass** in der Zone, wo er in der Unterseite (16) der Hülse mündet, die allgemeine Richtung des Kanals (14) um einen Winkel (Y), geringer ist als 20°, vorzugsweise in der Nähe von 10°, bezogen auf die Ebene der Unterseite (16) der Hülse, geneigt ist.

5. Hülse (6, 15) für Brille nach einem der Ansprüche 1 bis 4, **dadurch gekennzeichnet, dass** der Kanal (7, 14) und der Kabelkanal (9, 17), der ihn verlängert, im Wesentlichen in der Längssymmetrieebene der Hülse angeordnet sind.

6. Hülse (6, 15) für Brille nach einem der Ansprüche 1 bis 5, **dadurch gekennzeichnet, dass** die Öffnung (11) des Kabelkanals (9, 17) nach außen sich oberhalb der Ohrmuschel des mit der Brille versehenen Benutzers erstreckt.

7. Hülse (6, 15) für Brille nach einem der Ansprüche 1 bis 6, **dadurch gekennzeichnet, dass** die Öffnung (11) des Kabelkanals (9, 17) sich über eine Länge erstreckt, die zwischen 1 und 2 cm beträgt.

8. Hülse (6, 15) für Brille nach einem der Ansprüche 1 bis 7, **dadurch gekennzeichnet, dass** eine der Kneifpositionen des Kabels (10) zwischen den Rändern (12) der Öffnung (11) des Kabelkanals (9, 17) sich lotrecht zum Tragus des mit der Brille versehenen Benutzers befindet.

9. Hülse (6, 15) für Brille nach einem der Ansprüche 1 bis 8, **dadurch gekennzeichnet, dass** die Breite der Öffnung (11) des Kabelkanals (9, 17) nach außen zwischen 50% und 95% des Durchmessers des Kabels (10) beträgt.

10. Hülse (6, 15) für Brille nach einem der Ansprüche 1 bis 9, **dadurch gekennzeichnet, dass** sie mit einem Abschnitt eines Hörapparats dotiert ist, der in seiner Ausnehmung (5, 18, 19) aufgenommen ist.

11. Brille, **dadurch gekennzeichnet, dass** einer ihrer beiden Bügel mit einer Hülse (6, 15) gemäß einem der Ansprüche 1 bis 9 versehen ist.

## Claims

1. An eyeglasses end-tip (6, 15) intended to be attached by its front end (2) to the free end of one temple of the said eyeglasses and to contain part of a hearing aid in immediate proximity to its rear end (3), situated in the vicinity of the ear of the user equipped with said eyeglasses, said end-tip including a cavity (5, 18, 19), suitable to take and fixedly hold the aforementioned part of the hearing aid and having a duct (7, 14) drilled through a part of its length extending from the cavity to the front end (2) of the end-tip and emerging externally to the latter from its lower face (8,16), said duct (7, 14) being intended to take the cable (10) connecting the electrical power source (4) housed alone or with the transmitter in the cavity (5, 18, 19) to the other part of the hearing aid placed in the auditory canal of the user equipped with the eyeglasses, **characterised in that** the duct (7, 14) extends in the form of a channel (9, 17) hollowed out in the lower face (8,16) of the end-tip, the width of the external opening (11) of said channel being less than the cable diameter (10) in at least two slots so as to provide at least two cable pinch positions (10) between the two converging edges (12) of said opening (11).

2. An eyeglasses end-tip (6) according to claim 1, **characterised in that** the width of the external opening (11) of the channel (9) is approximately constant and less than the diameter of the cable (10) over the entire part of said channel suitable to take said cable, so as to provide a multiplicity of cable pinch positions (10) between the two converging edges (12) of said opening (11).

3. An eyeglasses end-tip (15) according to claim 1, **characterised in that** the duct (14) emerges externally to the end-tip from a slightly inclined direction relative to that of the lower face (16) of the end-tip so that the width of the external opening (11) of the channel (17) increases progressively, from the rear (3) to the front (2) of the end-tip, yet remains less than the diameter of the cable in certain locations (10) so that it nevertheless provides various cable pinch positions between its converging edges.

4. An eyeglasses end-tip (15) according to claim 3, **characterised in that**, in the area where it emerges in the lower face (16) of the end-tip, the general direction of the duct (14) is inclined at an angle (Y) of less than 20°, and preferably close to 10°, relative to the plane of said lower face (16) of the end-tip.

5. An eyeglasses end-tip (6, 15) according to any of claims 1 to 4, **characterised in that** the duct (7, 14) and the channel (9, 17) that extends it are situated approximately in the longitudinal plane of symmetry of the end-tip.

6. An eyeglasses end-tip (6, 15) according to any of claims 1 to 5, **characterised in that** the external opening (11) of the channel (9, 17) extends above the auricle of the user equipped with said eyeglasses.

7. An eyeglasses end-tip (6, 15) according to any of claims 1 to 6, **characterised in that** the opening (11) of the channel (9, 17) extends for a length of between 1 and 2 cm.

8. An eyeglasses end-tip (6, 15) according to any of claims 1 to 7, **characterised in that** one of the cable pinch positions (10) between the edges (12) of the opening (11) of the channel (9, 17) is situated directly above the tragus of the user equipped with the eyeglasses.

9. An eyeglasses end-tip (6, 15) according to any of claims 1 to 8, **characterised in that** the width of the external opening (11) of the channel (9, 17) is between 50% and 95% of the diameter of the cable (10).

10. An eyeglasses end-tip (6, 15) according to any of claims 1 to 9, **characterised in that** it is equipped with part of a hearing aid housed in its cavity (5, 18, 19).

11. Eyeglasses **characterised in that** one of their two temples is equipped with an end-tip (6, 15) in conformity with any of claims 1 to 9.
